# EUROPEAN PATENT APPLICATION

(11) **EP 4 711 233 A1**
(43) Date of publication of application: **18.03.2026**
(21) Application number: 24803343.3
(22) Date of filing: 16.04.2024
(51) Int. Cl.: B61L 23/00, B60L 3/00

(54) **OBSTACLE DETECTION ASSITANCE SYSTEM AND OBSTACLE DETECTION ASSISTANCE METHOD**

(30) Priority: 10.05.2023 JP 2023077966
(71) Applicant: Hitachi, Ltd., Tokyo 100-8280 (JP)
(72) Inventor: ODA, Atsushi, Tokyo 100-8280 (JP); UKAJI, Fumiaki, Tokyo 100-8280 (JP)
(74) Representative: MERH-IP Matias Erny Reichl Hoffmann Patentanwälte PartG mbB
(86) International application number: PCT/JP2024/015167
(87) International publication number: WO 2024/232228

(57) **Abstract**

An object is to reduce error alarms without interrupting driving assistance to a driver in an obstacle detection line of sight system mounted on a track transport system. In order to solve the above problem, there is provided an obstacle detection assistance system for assisting obstacle detection during traveling of a vehicle, and the obstacle detection assistance system includes: a driving assistance display unit configured to display driving assistance information that is information for assisting vehicle driving; an obstacle detection unit configured to detect an obstacle that hinders the traveling of the vehicle; a criterion determination unit configured to determine a criterion when the obstacle detection unit detects the obstacle; and an external environment recognition unit configured to recognize an external environment of the vehicle, in which the criterion determination unit sets a criterion according to the external environment, and as the criterion, a threshold of the number of times an obstacle is detected by the obstacle detection unit, or a matching degree of detection results by the obstacle detection unit, or both the threshold of the number of times an obstacle is detected and the matching degree of the detection results are set.

## Description

### Technical Field

The present invention relates to an obstacle detection assistance system mounted on a track transport system that travels on a predetermined track.

### Background Art

In a track transport system in which a transport vehicle travels on a track, when there is an obstacle on the track, the obstacle cannot be avoided by steering, and thus it is important to detect the obstacle on the track in order to improve safety and operability of the track transport system. In recent years, research has been conducted on an obstacle detection assistance system that detects an obstacle on a track using an external sensor such as a millimeter wave radar, a laser radar, or a camera, and notifies a driver of a detection result to assist driving of the driver. In the obstacle detection assistance system, it is important to reduce erroneous detection of an obstacle in order to avoid complicated notification to a driver. PTL 1 discloses a technique for reducing error alarms to a driver in an obstacle detection assistance system.

### Citation List

### Patent Literature

PTL 1: JP2022-135627A

### Summary of Invention

### Technical Problem

In the obstacle detection assistance system, it is important to reduce erroneous detection of an obstacle in order to avoid complicated notification to a driver. In general, when a detection rate is improved, an erroneous detection rate tends to be improved. The technique disclosed in PTL 1 interrupts driving assistance to a driver when an external environment of a train corresponds to an erroneous detection condition in which a non-obstacle is erroneously detected as an obstacle by an obstacle detection unit. Therefore, although erroneous detection for the driver is reduced, there is a problem that driving assistance is not performed in a section corresponding to the erroneous detection condition.

In order to solve the above problems, an object of the invention is to reduce error alarms without interrupting driving assistance to a driver in an obstacle detection assistance system mounted on a track transport system.

### Solution to Problem

In order to solve the above problem, an obstacle detection assistance system according to the invention is a system for assisting obstacle detection during traveling of a vehicle, and the obstacle detection assistance system includes: a driving assistance display unit configured to display driving assistance information that is information for assisting vehicle driving; an obstacle detection unit configured to detect an obstacle that hinders the traveling of the vehicle; a criterion determination unit configured to determine a criterion when the obstacle detection unit detects the obstacle; and an external environment recognition unit configured to recognize an external environment of the vehicle, in which the criterion determination unit sets a criterion according to the external environment, and as the criterion, a threshold of the number of times an obstacle is detected by the obstacle detection unit, or a matching degree of detection results by the obstacle detection unit, or both the threshold of the number of times an obstacle is detected and the matching degree of the detection results are set.

### Advantageous Effects of Invention

According to the invention, it is possible to reduce error alarms without interrupting driving assistance to a driver in the obstacle detection assistance system mounted on a track transport system.

Problems, configurations, and effects other than those described above will become apparent from the description of the embodiments of the invention and the drawings.

### Brief Description of Drawings

[FIG. 1] FIG. 1 illustrates a configuration of an obstacle detection assistance system according to a first embodiment of the invention.
[FIG. 2] FIG. 2 is a flowchart illustrating processing of a criterion determination unit in the first embodiment of the invention.
[FIG. 3] FIG. 3 is a functional block diagram illustrating processing of an obstacle detection unit in the first embodiment of the invention.
[FIG. 4] FIG. 4 is a diagram illustrating obstacle determination for each threshold executed by an obstacle determination unit in the first embodiment of the invention.
[FIG. 5] FIG. 5 is a flowchart illustrating processing of a criterion determination unit in a second embodiment of the invention.
[FIG. 6] FIG. 6 is a diagram illustrating obstacle determination for each detection method executed by an obstacle determination unit in the second embodiment of the invention.

### Description of Embodiments

### [Embodiment 1]

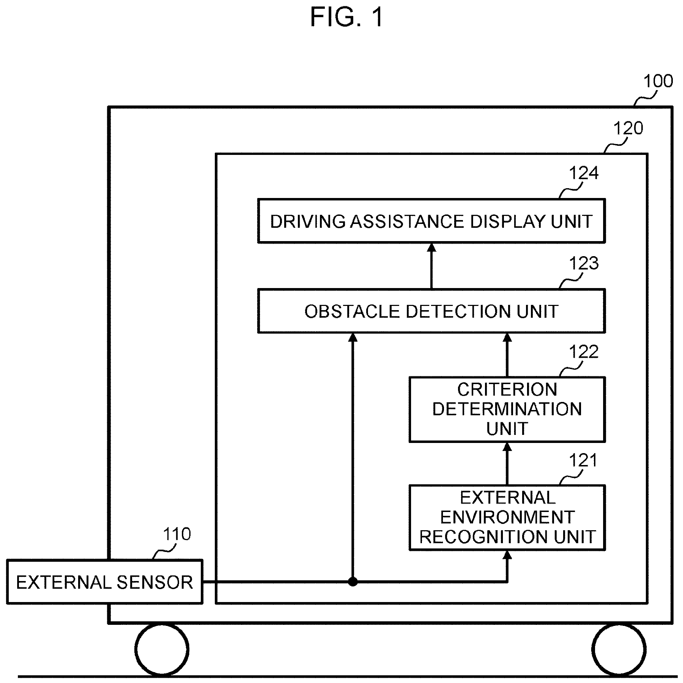

FIG. 1 is a diagram illustrating a configuration of an obstacle detection assistance system. The invention includes an external sensor 110 mounted on a train 100 for sensing an external situation, and an obstacle detection assistance system 120 that notifies a driver of presence or absence of an obstacle in front of the driver and assists the driver in driving. The obstacle detection assistance system 120 includes an external environment recognition unit 121 that recognizes an external environment of the train 100 based on sensor information from the external sensor 110, a criterion determination unit 122 that determines a criterion in obstacle detection based on information from the external environment recognition unit 121, an obstacle detection unit 123 that detects an obstacle in front of the train 100 based on the sensor information from the external sensor 110 and the criterion from the criterion determination unit 122, and a driving assistance display unit 124 that notifies a driver of assistance content information based on obstacle detection result information from the obstacle detection unit 123.

The external sensor 110 senses a state around (particularly, in front of) the train 100 and transmits sensing data to the external environment recognition unit 121 and the obstacle detection unit 123. Examples of the external sensor 110 include a camera, a laser range finder (LIDAR), a millimeter wave radar, and a global navigation satellite system (GNSS). Examples of the camera include a monocular camera, a stereo camera, and an infrared camera. A plurality of sensors are generally mounted for redundancy. When the train 100 travels in a traveling direction, the external sensor 110 installed in a leading car on a traveling direction side is used.

The external environment recognition unit 121 recognizes the external environment in front of the train 100 using external sensor data from the external sensor 110. The external environment recognized here includes a route environment such as a station area, a railroad crossing, or a railroad bridge, a route shape environment such as a straight line or a curve, a time environment such as daytime or nighttime, and a train environment such as a vehicle speed or a self-position. The route environment is recognized mainly using a deep neural network (DNN) that is trained on a target. The route shape environment is recognized from a shape of a front rail detected by image processing. As a method of detecting a rail by image processing, specifically, there are a method of searching for a rail using luminance gradient information in an image, a method of detecting a rail using semantic segmentation using a DNN, and the like. In the invention, a method thereof is not limited as long as the rail can be detected. As the time environment, a time zone may be estimated based on an average luminance value of external sensor information (particularly, image data), or time information in GNSS data may be used. The time information may be acquired from another on-vehicle system (not illustrated). In the invention, a method thereof is not limited as long as the time can be estimated. In the train environment, the vehicle speed may be estimated based on GNSS data, or a speed obtained by performing simultaneous localization and mapping (SLAM) using LIDAR data may be used. The speed may be acquired from another on-vehicle system (not illustrated). The self-position may be latitude and longitude information obtained by the GNSS data, or may be position information starting from a certain position obtained by integrating the vehicle speed. The self-position may be acquired from another on-vehicle system (not illustrated). In the invention, a method thereof is not limited as long as the vehicle speed and the self-position can be estimated. The external environment recognition unit 121 transmits the recognized external environment to the criterion determination unit 122. For the route environment and the route shape environment, a database in which a relationship between the environmental information and a position where the environment exists is recorded may be held in advance, and external environment information at a current position of the train 100 may be obtained based on the position of the train 100 and the database.

The criterion determination unit 122 determines a criterion for object detection of the obstacle detection unit 123 using the external environment recognized by the external environment recognition unit 121, vehicle information acquired from another on-vehicle system (not illustrated), a self-position, and door opening and closing information. It is determined whether the external environment is an external environment that affects erroneous detection of object detection, and a criterion for object detection according to the external environment is determined. The criterion includes, when the obstacle detection unit 123 detects an object, continuous detection threshold information indicating how many continuous detections in time-series data of object detection results are required to determine that an object is detected, and detection method information indicating whether the detection result of the object is determined to be detected by a logical OR or a logical AND. The criterion determined by the criterion determination unit 122 is the continuous detection threshold information, or the detection method information, or both the continuous detection threshold information and the detection method information. The criterion determination unit 122 transmits the determined criterion to the obstacle detection unit 123.

The obstacle detection unit 123 grasps a situation in front of the train 100 using the external sensor data from the external sensor 110 and the criterion from the criterion determination unit 122, and detects an obstacle. For object detection processing of the obstacle detection unit 123, a technique used in the automobile field can be used. For example, there is a method of creating a parallax image using a stereo camera and recognizing a shape and position of an object in front from the parallax image. There is also a method of recognizing an object in an image from a monocular image using a DNN and a method of recognizing an object from LIDAR point cloud data. At this time, the DNN is one of methods used for machine learning, and detects various objects by extracting and training features of the objects. In the invention, a method thereof is not limited as long as an obstacle can be detected. The obstacle detection unit 123 determines a final obstacle based on an object detection result obtained by a stereo camera, machine learning, or LIDAR according to the criterion from the criterion determination unit 122. For example, when "2" is transmitted from the criterion determination unit 122 as the continuous detection threshold information, the object is not regarded as being detected unless the object is detected twice continuously. In this way, a possibility of erroneously recognizing a randomly occurring detection object as an obstacle is reduced, thereby reducing erroneous detection.

The driving assistance display unit 124 determines assistance contents to be notified to the driver based on the obstacle detection result information from the obstacle detection unit 123 and the vehicle speed, and displays the assistance contents on a display device. For example, a scene is defined for each environment in front of the train 100, and the assistance content for the driver is determined for each scene. The scene includes, for example,
(1) There are no obstacles in a track and around the track.
(2) There is an obstacle around the track.
(3) There is an obstacle in the track, but since a distance from the train 100 is long or a speed of the train 100 is low, it is not necessary to perform a brake operation to avoid a collision.
(4) There is an obstacle in the track, but a collision can be avoided by immediately operating the brake.
(5) There is an obstacle in the track, and there is a high possibility that a collision cannot be avoided.

The driving assistance display unit 124 determines the assistance content for each scene, for example, when the scene in front of the train 100 is (3), the driving assistance display unit 124 notifies the driver of only the presence of the object, and when the scene is (4), the driving assistance display unit 124 notifies the driver to perform a brake operation.

The driving assistance display unit 124 notifies the driver of the assistance content for the driver through a human machine interface (HMI) or notifies the driver of the assistance content through voice. In the invention, a method of communication is not limited as long as the assistance content to the driver is transmitted to the driver.

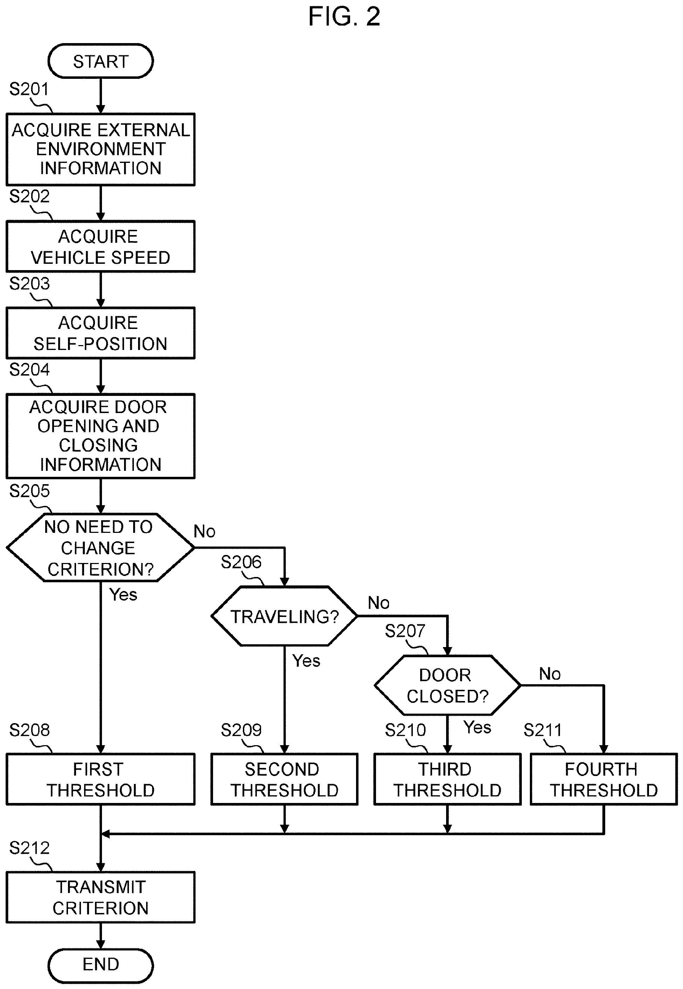

Next, processing of the criterion determination unit 122 according to Embodiment 1 of the invention will be described with reference to FIG. 2. In Embodiment 1, an example in which a criterion output by the criterion determination unit 122 is continuous detection threshold information will be described.

FIG. 2 is a flowchart illustrating the processing executed by the criterion determination unit 122.

### Step S201:

The criterion determination unit 122 acquires external environment information (a route environment such as a station area, a railroad crossing, or a railroad bridge, a route shape environment such as a straight line or a curve, a time environment such as daytime or nighttime, and a train environment such as a vehicle speed) from the external environment recognition unit 121.

### Step S202:

The criterion determination unit 122 acquires a vehicle speed from another on-vehicle system (for example, a vehicle information control system). As the vehicle speed, the vehicle speed estimated by the external environment recognition unit 121 may be used. In the invention, a calculation method and an acquisition method are not limited as long as the vehicle speed can be obtained.

### Step S203:

The criterion determination unit 122 acquires a self-position from the other on-vehicle system (for example, the vehicle information control system). As the self-position, the self-position estimated by the external environment recognition unit 121 may be used. In the invention, a calculation method and an acquisition method are not limited as long as the self-position can be obtained.

### Step S204:

The criterion determination unit 122 acquires door opening and closing information indicating an opening and closing state of a door from the other on-vehicle system (for example, the vehicle information control system). In the invention, a calculation method and an acquisition method are not limited as long as the door opening and closing information can be obtained.

### Step S205:

The criterion determination unit 122 determines whether to change the criterion from the external environment information. If the route environment is not a station area, a railroad crossing, or a railroad bridge, the possibility of erroneous detection is low, and thus it is determined that the criterion does not need to be changed. The processing proceeds to step S208. If the route environment is a station area, a railroad crossing, or a railroad bridge, there is a high possibility of erroneous detection, and thus it is determined that the criterion needs to be changed. The processing proceeds to step S206. If the route shape environment is a straight line, the possibility of erroneous detection is low, and thus it is determined that the criterion does not need to be changed. The processing proceeds to step S208. If the route shape environment is a curve, there is a high possibility of erroneous detection, and thus it is determined that the criterion needs to be changed. The processing proceeds to step S206.

### Step S206:

The criterion determination unit 122 determines whether the train 100 is traveling based on the vehicle speed. Since there is a high possibility of erroneous detection during traveling, it is determined that the criterion needs to be changed. The processing proceeds to step S209. If the vehicle is stopped, the processing proceeds to step S207.

### Step S207:

The criterion determination unit 122 determines whether a door of the train 100 is open or closed based on the door opening and closing information. If the door is closed, it is determined that the train 100 is immediately before departure, and the criterion is changed so that an obstacle near the train 100 can be detected when the train 100 departs. The processing proceeds to step S210. If the door is open, it is determined that the train is stopped at a station. If the driver is notified every time an obstacle in front of the train 100 is detected while the train 100 is stopped at a station, an assistance display may be cumbersome. Therefore, the criterion is changed so as not to basically detect the obstacle when the train is stopped at a station. The processing proceeds to step S211.

### Step S208:

This is a case where it is determined that the external environment of the train 100 is an environment in which the possibility of erroneous detection is low. Therefore, in order to reduce non-detection, a continuous detection threshold is set so as to detect an object as much as possible. For example, if an object is continuously detected twice, it is considered that the object is detected. The threshold may be other than "2", and it is desirable to perform evaluation using external sensor data acquired in an environment in which the obstacle detection assistance system 120 is introduced and to set a threshold so that non-detection and erroneous detection fall within a desired range. Therefore, if erroneous detection falls within a desired range, the continuous detection threshold may be set to "1" (that is, when an object is detected, it is considered that detection is performed). The continuous detection threshold determined in this step is referred to as a first threshold. The processing proceeds to step S212.

### Step S209:

This is a case where it is determined that the external environment of the train 100 is an environment in which the possibility of erroneous detection is relatively high. Therefore, in order to reduce erroneous detection, a continuous detection threshold is set so as to avoid detecting objects as much as possible. The threshold defined in this step is set to a value larger than the first threshold, and, for example, if an object is continuously detected four times, it is considered that the object is detected. The threshold may be other than "4", and it is desirable to perform evaluation using external sensor data acquired in an environment in which the obstacle detection assistance system 120 is introduced and to set a threshold so that erroneous detection falls within a desired range. The continuous detection threshold determined in this step is referred to as a second threshold. The processing proceeds to step S212.

### Step S210:

This is a case where it is determined that the external environment of the train 100 is stopped and immediately before departure. In this case, it is necessary to detect an obstacle near the train 100 at the time of departure, but meanwhile, the external environment is an external environment in which the continuous erroneous detection of the same object is possible because the train is stopped. Therefore, in order to make it more difficult to erroneously detect an object than when the vehicle is traveling, a value larger than the second threshold is set as the threshold defined in this step. Since it is necessary to detect an obstacle near the train 100 as described above, it is desirable that a difference with the second threshold is a small value, and, for example, if the obstacle is continuously detected five times, it is considered that the obstacle is detected. The threshold may be other than "5", and it is desirable to perform evaluation using external sensor data acquired in an environment in which the obstacle detection assistance system 120 is introduced and to set a threshold so that erroneous detection falls within a desired range. The continuous detection threshold determined in this step is referred to as a third threshold. The processing proceeds to step S212.

### Step S211:

This is a case where it is determined that the external environment of the train 100 is a state in which the train is stopped at a station and the door is open. In this case, If the driver is notified every time an obstacle in front of the train 100 is detected, an assistance display may be cumbersome. Since the train 100 is stopped, there is no possibility of collision with an obstacle even if the obstacle is not detected. Therefore, basically, a large value is set as the threshold defined in this step in order not to detect an object. For example, a value equal to or greater than a maximum number of pieces of time-series data that the obstacle detection unit 123 can hold to use for obstacle detection is set as the threshold. In this way, the object in front of the train 100 is not detected, and it is possible to minimize the assistance display for the driver in a state where the train is stopped at a station and the door is open. The continuous detection threshold determined in this step is referred to as a fourth threshold. The processing proceeds to step S212.

### Step S212:

The criterion determination unit 122 transmits the criterion to the obstacle detection unit 123.

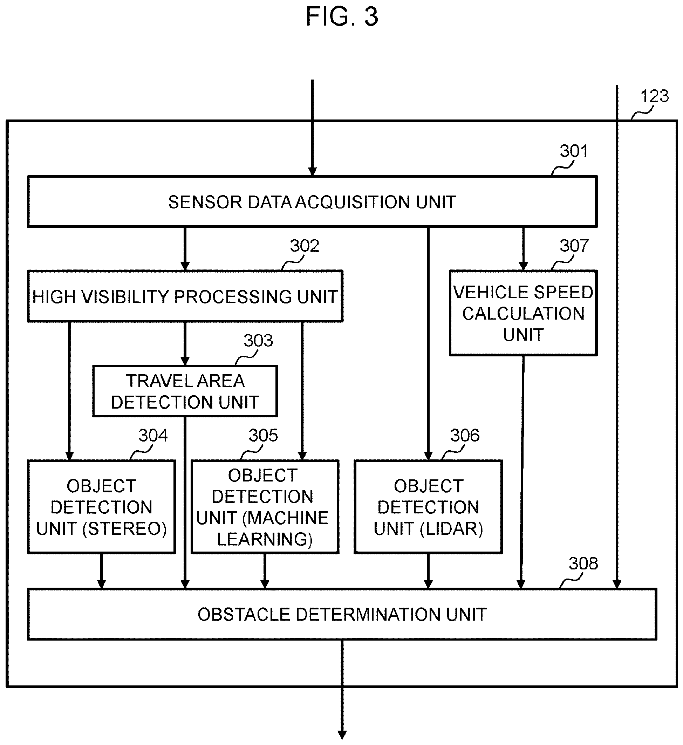

Next, processing of the obstacle detection unit 123 according to Embodiment 1 of the invention will be described with reference to FIG. 3.

FIG. 3 is a functional block diagram illustrating processing executed by the obstacle detection unit 123.

A sensor data acquisition unit 301 of the obstacle detection unit 123 acquires sensor data from the external sensor 110 such as a stereo camera, a monocular camera, LIDAR, or GNSS. The external sensor 110 may be the external sensor 110 other than the above, and a type thereof is not limited as long as the external sensor 110 can recognize the external environment. The sensor data acquisition unit 301 transmits image data to a high visibility processing unit 302, LIDAR data to an object detection unit (LIDAR) 306, and GNSS data to a vehicle speed calculation unit 307. The high visibility processing unit 302 adjusts luminance of the image data, corrects a scene in which there is a difference in brightness such as an entrance and exit of a tunnel, and generates a high visibility image. The generated high visibility image is transmitted to a travel area detection unit 303, an object detection unit (stereo) 304, and an object detection unit (machine learning) 305. The travel area detection unit 303 detects rails by image processing, and defines a travel area where the train 100 may travel based on a detected rail detection result. A method of defining the travel area may be defined based on something other than the rail detection result. For example, a database may be held in which a rail shape and a position are associated with each other, the rail shape in front of the train 100 may be grasped by comparing a self-position of the train 100 with the position in the database, and the travel area may be defined based on the grasped shape. When the external environment recognition unit 121 performs rail detection processing, a rail detection result may be acquired from the external environment recognition unit 121. In the invention, a method thereof is not limited as long as the travel area can be defined. The object detection unit (stereo) 304 creates a parallax image using a stereo camera, and recognizes a three-dimensional shape and position of an object in front from the parallax image. A detection result is transmitted to an obstacle determination unit 308. The object detection unit (machine learning) 305 recognizes an object on an image from a monocular camera image using a DNN. The DNN is one of methods used for machine learning, and detects various objects by extracting and training features of the objects. The object detection unit (machine learning) 305 transmits the detection result to the obstacle determination unit 308. An object detection unit (LIDAR) 306 detects an object from point cloud data acquired from a LIDAR sensor. A point cloud that exists at a short distance is regarded as one object, and a three-dimensional shape and a position of an object around the train 100 are recognized. The object detection unit (LIDAR) 306 transmits a detection result to the obstacle determination unit 308. The vehicle speed calculation unit 307 calculates a vehicle speed based on position information (latitude and longitude) obtained from the GNSS data and an elapsed time, and transmits the vehicle speed to the obstacle determination unit 308. The obstacle determination unit 308 determines an obstacle to be notified to the driver based on the travel area acquired from the travel area detection unit 303, the object detection results acquired from the object detection unit (stereo) 304, the object detection unit (machine learning) 305, and the object detection unit (LIDAR) 306, the vehicle speed acquired from the vehicle speed calculation unit 307, and the criterion acquired from the criterion determination unit 122.

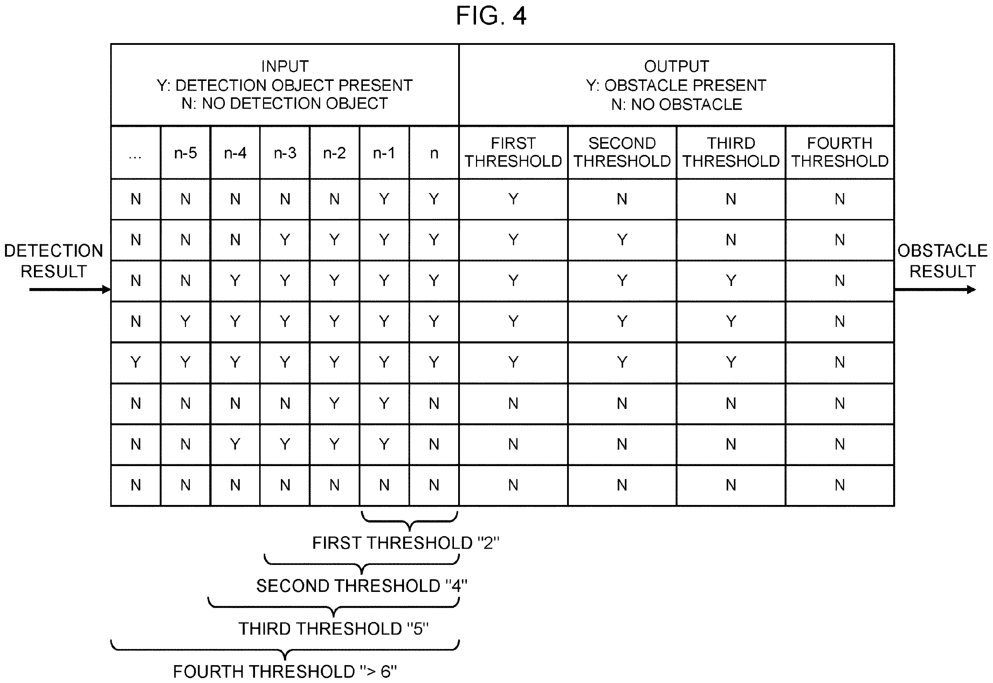

Next, an example of obstacle determination processing for each threshold executed by the obstacle determination unit 308 in FIG. 3 will be described with reference to FIG. 4. FIG. 4 illustrates a time-series result (n, n-1, n-2...) of a certain detection result and an output for each threshold when the detection result is input. In the example of FIG. 4, the first threshold is "2", the second threshold is "4", the third threshold is "5", and the fourth threshold is "6 or more". In the input of FIG. 4, Y means that there is a detection object, and N means that there is no detection object. In the output, "Y" means that it is determined that there is an obstacle as an output of the obstacle detection unit 123, and "N" means that it is determined that there is no obstacle. Here, an input object detection result is a detection result of an object present within a travel area and within a stoppable distance of the train 100 obtained based on the vehicle speed, among the object detection results acquired from the object detection unit (stereo) 304, the object detection unit (machine learning) 305, and the object detection unit (LIDAR) 306 in FIG. 3. In an example (a first row in FIG. 4) in which an object is continuously detected only twice in most recent time-series inputs, if the criterion from the criterion determination unit 122 is the first threshold, it is determined that there is an obstacle, but if the criterion is other than the first threshold, it is determined that there is no obstacle. Therefore, when the criterion determination unit 122 changes the criterion (threshold), different obstacle detection results can be output for the same detection result input. When the criterion is the second threshold, if no object is continuously detected in the most recent four times of the time-series inputs, it is determined that there is no obstacle. Therefore, even if erroneous detection occurs continuously, notification to the driver is prevented, and error alarms can be reduced without interrupting driving assistance. When the criterion is the fourth threshold, it is determined that there is no obstacle in any input result, making it possible to limit the notification to the driver when the train is stopped at a station and the door is open. Accordingly, for example, at a station where there is a railroad crossing for a passenger to cross just before the train 100, it is possible to prevent a pedestrian crossing from being determined as an obstacle one by one and prevent the driver from being notified of assistance contents to alert the driver.

In the present example, the external environment to be recognized is a route environment such as a station area, a railroad crossing, or a railroad bridge, a route shape environment such as a straight line or a curve, a time environment such as daytime or nighttime, and a train environment such as a vehicle speed or a self-position, but other environments in which erroneous detection is likely to occur may be in a recognition target. For example, there is weather (rain, snowfall), backlighting, and passing of oncoming trains at night. Such conditions are particularly strict for image recognition, and a possibility of erroneous detection increases. Regarding the weather, weather information may be acquired from an external system (not illustrated), or it may be determined that it is raining when a wiper is operating. Regarding the backlighting and the passing of oncoming trains at night, a determination may be made based on an average luminance value of an entire image, or may be made by detecting an area in which the luminance value is extremely high in only a part of the image. In the invention, a method is not limited as long as the external environment recognition unit 121 can recognize external conditions (weather (rain, snowfall), backlighting, and passing of oncoming trains at night).

In the present example, the criterion is determined based on the external environment recognized by the external environment recognition unit 121, but when the route environment, the route shape environment, the time environment, and the train environment can be acquired from other than the external environment recognition unit 121, the route environment, the route shape environment, the time environment, and the train environment may be acquired from other than the external environment recognition unit 121. For example, a database in which a route environment or a route shape environment is associated with position information may be held, and the route environment or the route shape environment may be acquired by comparing the self-position of the train 100 with the position in the database. Since the time environment and the train environment are generally held by the other on-vehicle system (for example, the vehicle information control system), the time environment and the train environment may be acquired from the other on-vehicle system. In this way, it is possible to reduce a processing load of the external environment recognition unit 121.

### [Embodiment 2]

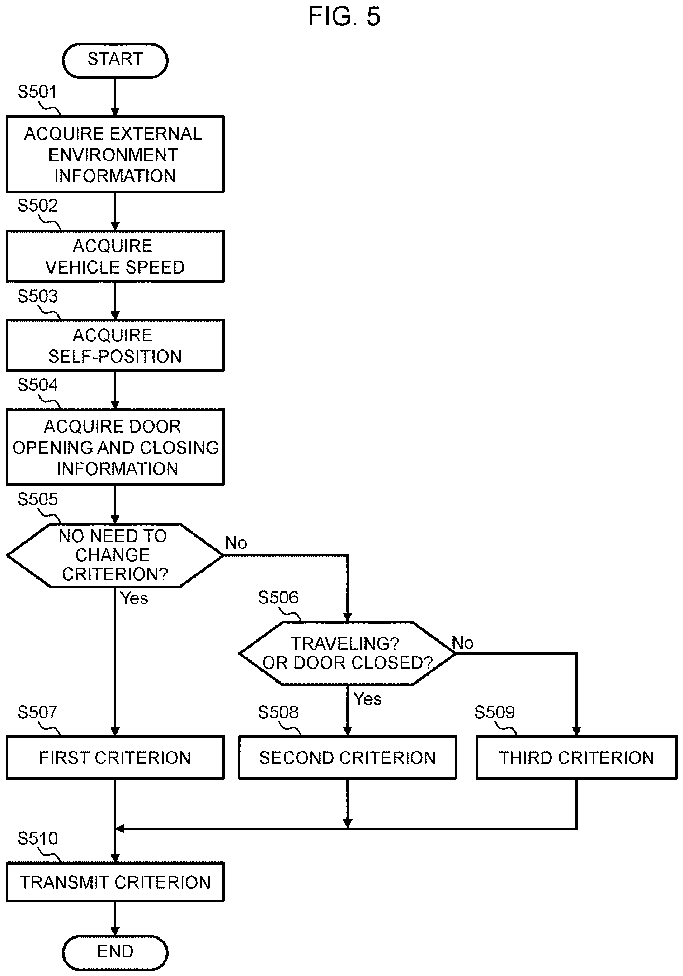

FIG. 5 is a flowchart illustrating processing executed by the criterion determination unit 122 of the obstacle detection assistance system 120 according to the second embodiment. In the first embodiment, the continuous detection threshold is used as the criterion, and the processing of the obstacle determination unit 308 is controlled to reduce erroneous detection by changing the continuous detection threshold, but in the present example, an example will be described in which a detection method indicating whether a detection result of an object is determined by a logical OR or a logical AND is used as the criterion, and processing of the obstacle determination unit 308 is controlled to reduce erroneous detection by changing the detection method.

The processing of the criterion determination unit 122 according to Embodiment 2 of the invention will be described with reference to FIG. 5. FIG. 5 is a flowchart illustrating the processing executed by the criterion determination unit 122.

### Step S501:

The criterion determination unit 122 acquires external environment information (a route environment such as a station area, a railroad crossing, or a railroad bridge, a route shape environment such as a straight line or a curve, a time environment such as daytime or nighttime, and a train environment such as a vehicle speed) from the external environment recognition unit 121.

### Step S502:

The criterion determination unit 122 acquires a vehicle speed from another on-vehicle system (for example, a vehicle information control system). As the vehicle speed, the vehicle speed estimated by the external environment recognition unit 121 may be used. In the invention, a calculation method and an acquisition method are not limited as long as the vehicle speed can be obtained.

### Step S503:

The criterion determination unit 122 acquires a self-position from the other on-vehicle system (for example, the vehicle information control system). As the self-position, the self-position estimated by the external environment recognition unit 121 may be used. In the invention, a calculation method and an acquisition method are not limited as long as the self-position can be obtained.

### Step S504:

The criterion determination unit 122 acquires door opening and closing information indicating an opening and closing state of a door from the other on-vehicle system (for example, the vehicle information control system). In the invention, a calculation method and an acquisition method are not limited as long as the door opening and closing information can be obtained.

### Step S505:

The criterion determination unit 122 determines whether to change the criterion from the external environment information. If the route environment is not a station area, a railroad crossing, or a railroad bridge, the possibility of erroneous detection is low, and thus it is determined that the criterion does not need to be changed. The processing proceeds to step S507. If the route environment is a station area, a railroad crossing, or a railroad bridge, there is a high possibility of erroneous detection, and thus it is determined that the criterion needs to be changed. The processing proceeds to step S506. If the route shape environment is a straight line, the possibility of erroneous detection is low, and thus it is determined that the criterion does not need to be changed. The processing proceeds to step S507. If the route shape environment is a curve, there is a high possibility of erroneous detection, and thus it is determined that the criterion needs to be changed. The processing proceeds to step S506.

### Step S506:

The criterion determination unit 122 determines whether the train 100 is traveling or the door is closed based on the vehicle speed and the door opening and closing information. Since there is a high possibility of erroneous detection during traveling, it is determined that the criterion needs to be changed. When the train 100 is not traveling but the door is closed, it is determined that the train 100 is immediately before departure, and the criterion is changed so that an obstacle near the train 100 can be detected when the train 100 departs. The processing proceeds to step S508. When the train is stopped and the door is open, it is determined that the train is stopped at a station. If the driver is notified every time an obstacle in front of the train 100 is detected while the train 100 is stopped at a station, an assistance display may be cumbersome. Therefore, the criterion is changed so as not to basically detect the obstacle when the train is stopped at a station. The processing proceeds to step S509.

### Step S507:

This is a case where it is determined that the external environment of the train 100 is an environment in which the possibility of erroneous detection is low. Therefore, in order to reduce non-detection, a criterion is set so as to detect an object as much as possible. For example, when an obstacle is determined using three time-series results of the obstacle detection result, a logical OR of the three time-series results is set as an output of the obstacle detection. That is, if an object is detected one or more times among the three time-series results, it is considered that the object is detected. In this way, it is possible to reduce non-detection. As the detection method, "logical OR" is used as the criterion. The processing proceeds to step S510.

### Step S508:

This is a case where it is determined that the external environment of the train 100 is an environment in which the possibility of erroneous detection is relatively high. Therefore, in order to reduce erroneous detection, a criterion is set so as to avoid detecting objects as much as possible. For example, when an obstacle is determined using three time-series results of the obstacle detection result, a logical AND of the three time-series results is set as an output of the obstacle detection. That is, if the object is detected three times among the three time-series results, it is considered that the object is detected. In this way, erroneous detection of an object that occurs randomly can be eliminated, and erroneous detection of driving assistance to be notified to the driver can be reduced. As the detection method, "logical AND" is used as the criterion. The processing proceeds to step S510.

### Step S509:

This is a case where it is determined that the external environment of the train 100 is a state in which the train is stopped at a station and the door is open. In this case, if the driver is notified every time an obstacle in front of the train 100 is detected, an assistance display may be cumbersome. Since the train 100 is stopped, there is no possibility of collision with an obstacle even if the obstacle is not detected. Therefore, a criterion for not detecting an object is used. For example, when an obstacle is determined using three time-series results of the obstacle detection result, notification of no obstacle is output regardless of the three time-series results. In this way, the object in front of the train 100 is not detected, and it is possible to minimize the assistance display for the driver in a state where the train is stopped at a station and the door is open. As the detection method, "there is no obstacle regardless of an input result" is used as the criterion. The processing proceeds to step S510.

### Step S510:

The criterion determination unit 122 transmits the criterion to the obstacle detection unit 123.

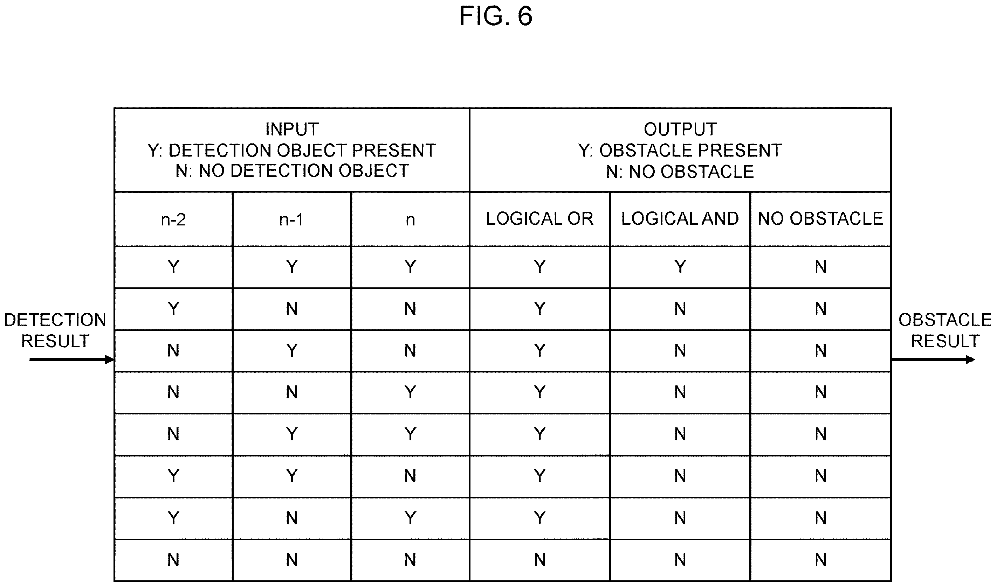

Next, an example of obstacle determination processing for each criterion executed by the obstacle determination unit 308 in FIG. 3 in the second embodiment will be described with reference to FIG. 6. FIG. 6 illustrates a time-series result (n, n-1, n-2...) of a certain detection result and an output for each criterion when the detection result is input. In the example in FIG. 6, three types of obstacle detection methods, that is, "logical OR of input", "logical AND of input", and "no obstacle regardless of input" are used as the criterion. In the input of FIG. 6, Y means that there is a detection object, and N means that there is no detection object. In the output, "Y" means that it is determined that there is an obstacle as an output of the obstacle detection unit 123, and "N" means that it is determined that there is no obstacle. Here, an input object detection result is a detection result of an object present within a travel area and within a stoppable distance of the train 100 obtained based on the vehicle speed, among the object detection results acquired from the object detection unit (stereo) 304, the object detection unit (machine learning) 305, and the object detection unit (LIDAR) 306 in FIG. 3. When the criterion is defined as "logical OR", it is determined that there is an obstacle if any one of the three time-series results is detected. By doing so, it is possible to reduce a non-detection rate. Meanwhile, when it is determined that the environment is the external environment in which erroneous detection is highly likely to occur, the detection method of the criterion is set to the logical AND. When the criterion is the "logical AND", if an obstacle is detected in all three time-series results, it is determined that there is an obstacle. Therefore, even if erroneous detection occurs randomly, notification to the driver is prevented unless erroneous detection continuously occurs three times, and error alarms can be reduced without interrupting driving assistance. When the criterion is "no obstacle regardless of input", it is determined that there is no obstacle in any input result, making it possible to limit the notification to the driver when the train is stopped at a station and the door is open. Accordingly, for example, at a station where there is a railroad crossing for a passenger to cross just before the train 100, it is possible to prevent a pedestrian crossing from being determined as an obstacle one by one and prevent the driver from being notified of assistance contents to alert the driver.

In Embodiments 1 and 2, an example has been described in which, as the criterion, either the continuous detection threshold information indicating how many continuous detections in time-series data of object detection results are required to determine that an object is detected, and the detection method information indicating whether the detection result of the object is determined to be detected by a logical OR or a logical AND is adopted. The criterion determined by the criterion determination unit 122 may be a criterion other than either the continuous detection threshold information or the detection method information, and for example, both the continuous detection threshold information and the detection method information may be used as the criterion. By setting the continuous detection threshold to a large value and further setting the detection method to the logical AND, it is possible to make it difficult to detect an object. In this way, it is possible to further reduce erroneous detection.

According to the examples described above, it is possible to reduce error alarms without interrupting driving assistance to a driver in the obstacle detection assistance system 120 mounted on a track transport system.

The embodiments of the invention described above are summarized as follows.
(1) The obstacle detection assistance system 120 is a system for assisting obstacle detection during traveling of a vehicle, and the obstacle detection assistance system 120 includes: the driving assistance display unit 124 that displays driving assistance information that is information for assisting vehicle driving; the obstacle detection unit 123 that detects an obstacle that hinders the traveling of the vehicle; the criterion determination unit 122 that determines a criterion when the obstacle detection unit 123 detects the obstacle; and the external environment recognition unit 121 that recognizes an external environment of the vehicle, in which the criterion determination unit 122 sets a criterion according to the external environment, and as the criterion, a threshold of the number of times an obstacle is detected by the obstacle detection unit 123, or a matching degree of detection results by the obstacle detection unit 123, or both the threshold of the number of times an obstacle is detected and the matching degree of the detection results are set. In this way, the obstacle detection assistance system 120 can reduce error alarms without interrupting driving assistance to the driver.
(2) The criterion determination unit 122 includes, as an external environment when the criterion is changed, one or more of a route environment such as a station area, a railroad crossing, or a railroad bridge, a route shape environment such as a straight line or a curve, a time environment such as daytime or nighttime, and a train environment such as a vehicle speed or a self-position.
(3) When the criterion determination unit 122 determines that the external environment is an environment in which erroneous detection is likely to occur, the criterion determination unit 122 changes the threshold of the number of times an obstacle is detected to a large value.
(4) When the criterion determination unit 122 determines that the external environment is an environment in which erroneous detection is likely to occur, the criterion determination unit 122 changes a detection method of the matching degree of the detection results from a logical OR to a logical AND.
(5) When the criterion determination unit 122 determines that the external environment is that the vehicle is stopped and a door is open, the criterion determination unit 122 sets the threshold of the number of times an obstacle is detected to be equal to or greater than a maximum number of past detection result data that the system is configured to hold.
(6) When the criterion determination unit 122 determines that the external environment is that the vehicle is stopped and a door is closed, the criterion determination unit 122 sets the threshold of the number of times an obstacle is detected to be less than a maximum number of past detection result data that the system is configured to hold.
(7) The obstacle detection unit 123 sets only a detection object present within a travel area and within a distance at which the vehicle is configured to stop as a determination target of obstacle detection.

Although embodiments of the invention have been described above, the invention is not limited to the embodiments described above, and various changes can be made without departing from the gist of the invention.

In the drawings described above, control lines and information lines that are considered necessary for description are illustrated, and not all the control lines and information lines on implementation are necessarily illustrated. For example, it may be considered that almost all configurations are actually interconnected.

An arrangement form of functional units of the obstacle detection assistance system 120 described above is merely an example. The arrangement form of the functional units can be changed to an optimal arrangement form from viewpoints of performance, processing efficiency, communication efficiency, and the like of hardware and software provided in the obstacle detection assistance system 120.

### Reference Signs List

- 100:: train
- 110:: external sensor
- 120:: obstacle detection assistance system
- 121:: external environment recognition unit
- 122:: criterion determination unit
- 123:: obstacle detection unit
- 124:: driving assistance display unit

## Claims

1. An obstacle detection assistance system for assisting obstacle detection during traveling of a vehicle, the obstacle detection assistance system comprising:
a driving assistance display unit configured to display driving assistance information that is information for assisting vehicle driving;
an obstacle detection unit configured to detect an obstacle that hinders the traveling of the vehicle;
a criterion determination unit configured to determine a criterion when the obstacle detection unit detects the obstacle; and
an external environment recognition unit configured to recognize an external environment of the vehicle, wherein
the criterion determination unit sets a criterion according to the external environment, and as the criterion, a threshold of the number of times an obstacle is detected by the obstacle detection unit, or a matching degree of detection results by the obstacle detection unit, or both the threshold of the number of times an obstacle is detected and the matching degree of the detection results are set.

2. The obstacle detection assistance system according to claim 1, wherein
the criterion determination unit includes, as an external environment when the criterion is changed, one or more of a route environment such as a station area, a railroad crossing, or a railroad bridge, a route shape environment such as a straight line or a curve, a time environment such as daytime or nighttime, and a train environment such as a vehicle speed or a self-position.

3. The obstacle detection assistance system according to claim 1, wherein
when the criterion determination unit determines that the external environment is an environment in which erroneous detection is likely to occur, the criterion determination unit changes the threshold of the number of times an obstacle is detected to a large value.

4. The obstacle detection assistance system according to claim 1, wherein
when the criterion determination unit determines that the external environment is an environment in which erroneous detection is likely to occur, the criterion determination unit changes a detection method of the matching degree of the detection results from a logical OR to a logical AND.

5. The obstacle detection assistance system according to claim 1, wherein
when the criterion determination unit determines that the external environment is that the vehicle is stopped and a door is open, the criterion determination unit sets the threshold of the number of times an obstacle is detected to be equal to or greater than a maximum number of past detection result data that the system is configured to hold.

6. The obstacle detection assistance system according to claim 1, wherein
when the criterion determination unit determines that the external environment is that the vehicle is stopped and a door is closed, the criterion determination unit sets the threshold of the number of times an obstacle is detected to be less than a maximum number of past detection result data that the system is configured to hold.

7. The obstacle detection assistance system according to claim 1, wherein
the obstacle detection unit sets only a detection object present within a travel area and within a distance at which the vehicle is configured to stop as a determination target of obstacle detection.

8. An obstacle detection assistance method of assisting obstacle detection during traveling of a vehicle, the obstacle detection assistance method comprising:
by a computer including at least a processor and a storage device,
displaying driving assistance information that is information for assisting driving of the vehicle;
detecting an obstacle that hinders the traveling of the vehicle;
determining a criterion when detecting the obstacle;
recognizing an external environment of the vehicle; and
setting the criterion according to the external environment when determining the criterion, wherein
a threshold of the number of times an obstacle is detected when the obstacle is detected, or a matching degree of detection results when the obstacle is detected, or both the threshold of the number of times an obstacle is detected and the matching degree of the detection results are set as the criterion.
